# EUROPÄISCHE PATENTSCHRIFT

(11) **EP 1 291 232 B1**
(45) Veröffentlichungstag und Bekanntmachung des Hinweises auf die Patenterteilung: **15.11.2006**
(21) Anmeldenummer: 02013355.9
(22) Anmeldetag: 19.06.2002
(51) Int. Cl.: B60N 2/04, B60N 2/18, B60N 2/16

(54) **Sitzgestell eines Kraftfahrzeugsitzes mit einem Sitzträger und vorderen Parallelogrammarmen**
Automotive vehicle seat frame with a seat support and front parallelogram arms
Châssis de siège de véhicules automobiles avec un support de siège et bras avant de parallélogramme

(30) Priorität: 10.09.2001 DE 10144452; 27.09.2001 DE 10147800
(43) Veröffentlichungstag der Anmeldung: 12.03.2003
(73) Patentinhaber: C.Rob. Hammerstein GmbH & Co.KG, 42699 Solingen (DE)
(72) Erfinder: Leng, Michael, 42655 Solingen (DE); Becker, Burkhard, 42657 Solingen (DE); Poley, Axel, 40597 Düsseldorf (DE); Beneker, Wilfried, Dr., 42799 Leichlingen (DE)
(74) Vertreter: Bauer, Wulf

(56) Entgegenhaltungen:
- EP-A- 0 445 528
- DE-A- 3 339 436
- DE-U- 9 422 199
- US-B1- 6 264 274

## Beschreibung

Die Erfindung bezieht sich auf ein Sitzgestell eines Kraftfahrzeuges mit einer Längsverstelleinrichtung und mit einem Sitzträger, der mindestens ein Seitenteil hat, welches Seitenteil eine erste Bohrung aufweist. Ein derartiges Sitzgestell ist aus US 6,264,274 B1 bekannt. Das vorbekannte Sitzgestell hat zudem einen vorderen Parallelogrammarm, an dem ein Lagermittel, insbesondere ein Bolzen oder eine Welle, vorspringt, das durch die erste Bohrung greift, so dass ein oberes Schwenkgelenk zwischen Seitenteil und Parallelogrammarm ausgebildet wird. Weiterhin ist der Parallelogrammarm über ein unteres Schwenkgelenk mit der Längsverstelleinrichtung verbunden.

Üblicherweise ist das Seitenteil des Sitzträgers in seinem hinteren Bereich über eine hintere Schwenkstütze mit dem Schienenpaar der Längsverstelleinrichtung gelenkverbunden. Auf diese Weise wird ein Gelenkviereck gebildet, das sich aus Seitenteil, vorderem Parallelogrammarm, Sitzschiene des Schienenpaares und hinterer Schwenkstütze zusammensetzt. Diesem Gelenkviereck ist ein Verstellmittel zugeordnet, es befindet sich zumeist am Gelenkpunkt zwischen der hinteren Schwenkstütze und dem Seitenteil. Wird es gelöst, kann der Sitzträger gegenüber der Längsverstellreinrichtung in der Höhe verstellt werden.

Zusätzlich zur Höhenverstellung wird von vielen Nutzern auch eine Neigungsverstellung des Sitzträgers gegenüber der Längsverstelleinrichtung gewünscht. Derartige Verstelleinrichtungen sind ansich bekannt. Es wird die Höhe der Vorderkante des Sitzträgers verstellt, der rückwärtige Bereich des Sitzträgers behält seine Höhe im wesentlichen bei.

Es ist bekannt, dass man eine derartige Neigungsverstellung erreicht, wenn man die Länge des vorderen Parallelogrammarmes veränderbar gestaltet. So sind Sitzgestelle bekannt, bei denen der vordere Parallelogrammarm durch ein Armpaar realisiert ist, das aus einem oberen und einem unteren Arm aufgebaut ist, welche in einem gemeinsamen Gelenk schwenkverbunden sind. Durch Ändern des Winkels, den diese beiden Arme einschließen, kann die Höhe der Sitzvorderkante eingestellt werden. Dazu ist eine Einstellvorrichtung für die Winkellage des oberen Armes relativ zum Sitzträger vorgesehen.

Während das Sitzgestell der eingangs genannten Art vier Gelenke hat, also ein sogenanntes Viergelenk ist, ist das Sitzgestell mit Einstellmöglichkeit der Höhe der Sitzvorderkante ein Fünfgelenk. Der Aufwand für dieses letztere Sitzgestell ist höher als beim Sitzgestell der eingangs genannten Art, denn es sind mehr Teile, darunter eine Einstellvorrichtung mit Hand- oder Motorantrieb, notwendig.

Bei der Fertigung von Sitzgestellen für Kraftfahrzeugsitze ist man bestrebt, die Produktion von Sitzen nur mit Höhenverstellung und solchen mit zusätzlicher Neigungsverstellung einfach zu gestalten, sodass eine kostengünstige Herstellung der beiden Alternativen der Ausbildung des Sitzgestells möglich ist. Hier setzt die Erfindung ein. Sie hat es sich zur Aufgabe gemacht, ein Sitzgestell der eingangs genannten Art dahingehend zu verbessern, dass für beide Alternativen, also einmal höhenverstellbares Sitzgestell ohne Neigungsverstellung und einmal höhenverstellbares Sitzgestell mit Neigungsverstellung, möglichst viele Gleichteile verwendet werden können, die Kinematik im Verstellbereich der Höhenverstellung beider Alternativen praktisch gleichgestaltet werden kann und die Fertigung einfach ist.

Diese Aufgabe wird gelöst durch das Sitzgestell mit den Merkmalen des Patentanspruchs 1.

Erfindungsgemäß können für die beiden alternativen Ausbildungen des Sitzgestells immer dieselben Sitzträger verwendet werden. Die Sitzträger sind aufgrund ihrer beiden Bohrungen so ausgebildet, dass sie entweder mit einem Parallelogrammarm verbunden werden können, oder aber mit dem oberen Arm eines Armpaares.

Die Kinematik der Höhenverstellvorrichtung ist in beiden Alternativen sehr ähnlich. Ist die Einstellvorrichtung für die Neigungsverstellung des neigungsverstellbaren Sitzgestells so eingestellt, dass die Achse des gemeinsamen Gelenks mit der ersten Bohrung fluchtet, ist die Kinematik der Höhenverstellung dieses so eingestellten neigungsverstellbaren Sitzes identisch mit der Kinematik der Höhenverstellung der anderen Alternative, also des nicht neigungsverstellbaren Sitzgestells. Der obere Doppelarm hat vorzugsweise im wesentlichen eine Länge zwischen seinen beiden Gelenkpunkten, die dem Abstand der beiden Bohrungen des Seitenteils entspricht.

Insgesamt ermöglicht die Erfindung eine konstruktiv einfache Ausbildung eines Sitzgestells, das in zwei Alternativen, nämlich einmal mit und einmal ohne Neigungsverstellung, hergestellt wird. Dabei können alle übrigen Teile des Kraftfahrzeugsitzes ungeändert bleiben. Es ist lediglich notwendig, bei einer manuell ausgeführten Einstellvorrichtung Platz für eine Handhabe dieser Einstellvorrichtung vorzusehen, beispielsweise einen Durchbruch für die Achse einer derartigen Einstellvorrichtung. Bei einer elektrisch ausgeführten Einstellvorrichtung ist Raum für den Antrieb vorzusehen.

In einer Weiterbildung der Erfindung hat der Sitzträger in bekannter Weise ein linkes und ein rechtes Seitenteil, einen linken und einen rechten vorderen Parallelogrammarm und zwei Schienenpaare der Längsverstelleinrichtung in der ersten Alternative. In der (zweiten) Alternative mit Neigungsverstellung sind die beiden vorderen Parallelogrammarme durch zwei Armpaare ersetzt. Dabei ist es möglich, aber nicht notwendig, auf beiden Sitzseiten eine Einstellvorrichtung vorzusehen.

Vorzugsweise sind die beiden vorderen Parallelogrammarme bzw. in der Alternative die beiden Armpaare durch eine Traverse miteinander verbunden. Dadurch ist das Sitzgestell insgesamt steifer und wird eine Querneigung unterdrückt. Es ist sichergestellt, dass beide vorderen Parallelogrammarme bzw. die Armpaare immer im wesentlichen parallel zueinander stehen.

In einer bevorzugten Weiterbildung befindet sich die zweite Bohrung näher einer Sitzvorderkante als die erste Bohrung. Dadurch lässt sich die notwendige Einstellvorrichtung relativ nahe an der Sitzvorderkante und dadurch griffgünstig bei manueller Ausbildung ausführen. Grundsätzlich kann die zweite Bohrung auch weiter weg von der Sitzvorderkante sein als die erste Bohrung.

In einer bevorzugten Ausbildung befinden sich beide Bohrungen etwa in einem gleichen Abstand vom zugehörigen Schienenpaar der Längsverstelleinrichtung. Anders ausgedrückt verläuft eine Verbindungslinie der beiden Bohrungen im wesentlichen parallel zu einer Längsabmessung des Seitenteils. Vorzugsweise liegen die beiden Bohrungen und eine Gelenkachse der hinteren Schwenkstütze des Seitenteils im wesentlichen auf einer Linie.

In einer Weiterbildung liegt die bereits besprochene, bestimmte Verstellposition der Einstellvorrichtung, in der das gemeinsame Gelenk im wesentlichen mit der ersten Bohrung fluchtet, in einem Bereich, der ausgehend von der Mittelposition der Einstellvorrichtung hin zu einer tieferen Einstellung der Sitzvorderkante liegt. Dies bedeutet, dass das Sitzgestell in der ersten Alternative ohne Neigungsverstellung eine Höhe der Sitzvorderkante hat, die eigentlich für einen Normalpassagier etwas zu gering ist. Bei der Alternative mit Neigungsverstellung kann die Sitzvorderkante im Vergleich zur ersten Alternative um einen größeren Weg angehoben werden, als sie nach unten abgesenkt werden kann.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird.

In der Figur zeigen:
- Figur 1:: Ein Sitzgestell in perspektivischer Darstellung in einer ersten Alternative ohne Neigungsverstellung, also in Form eines Gelenkvierecks auf jeder Sitzseite und
- Figur 2:: eine Seitenansicht eines Sitzgestells in der anderen (zweiten) Alternative, also mit Neigungsverstellung.

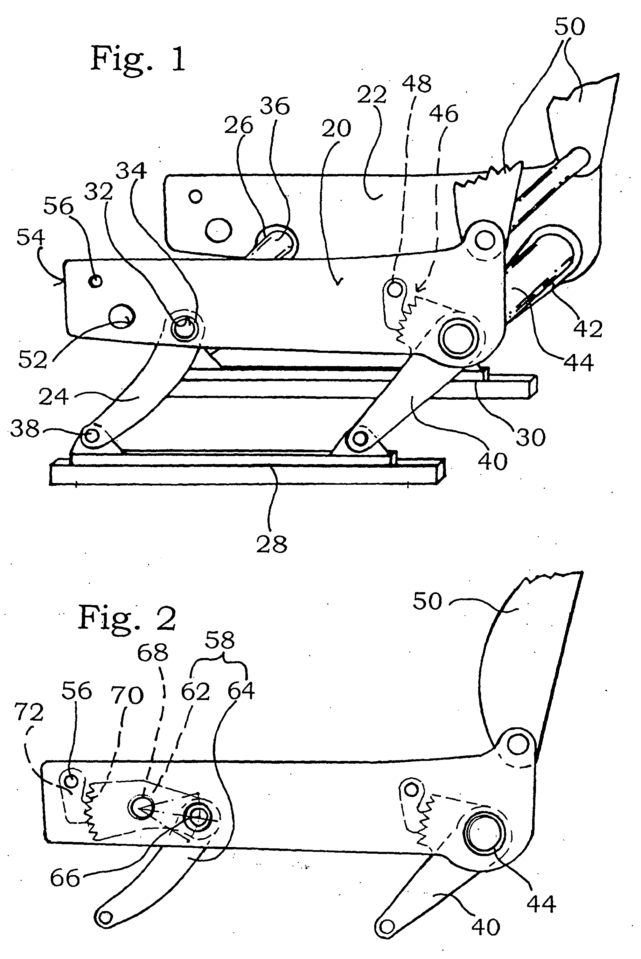

Fig. 1 zeigt das Sitzgestell eines Kraftfahrzeugsitzes in einer ersten Alternative. Ein Sitzträger, der ein linkes Seitenteil 20 und ein rechtes Seitenteil 22 aufweist, ist über zwei vordere Parallelogrammarme, nämlich einen linken vorderen Parallelogrammarm 24 und ein rechter vorderer Parallelogrammarm 26, mit einer Längsverstelleinrichtung verbunden, die ein linkes Schienenpaar 28 und ein rechtes Schienenpaar 30 hat. In jedem Seitenteil 20, 22 ist eine erste Bohrung 32 vorgesehen. Die beiden vorderen Parallelogrammarme 24, 26 haben jeweils ein erstes Lagermittel 34, das hier als Achsstummel ausgebildet ist und das in der ersten Bohrung 32 gelagert ist. Dieser Achsstummel 34 wird gebildet durch Endbereiche einer Traverse 36, über die die oberen Enden der vorderen Parallelogrammarme 24, 26 starr miteinander verbunden sind. Mit dieser Traverse 36 sind die vorderen Parallelogrammarme 24, 26 drehfest verbunden, die Endbereiche der Traverse 36 ragen seitlich über die Arme 24, 26 hinaus und bilden die Achsstummel 34. Die beschriebene Gelenkverbindung zwischen den oberen Enden der vorderen Parallelogrammarme 24, 26 und der ersten Bohrung 32 im jeweiligen Seitenteil 20, 22 wird als oberes Schwenkgelenk bezeichnet.

Die Ausbildung dieses oberen Schwenkgelenks ist grundsätzlich beliebig. In kinematischer Umkehrung kann anstelle der ersten Bohrung 32 auch ein erster Zapfen quer vom Seitenteil 20, 22 wegstehen. In dieser Ausbildung haben die Parallelogrammarme 24, 26 ein Loch, in das der Zapfen eingreift. Dieses Loch kann auch durch den Innenraum der Traverse 36 gebildet sein. Grundsätzlich ist es nicht notwendig, dass das Lagermittel mit einem Parallelogrammarm 24, 26 oder dem zugehörigen Seitenteil 20, 22 zusammenhängt. Das Lagermittel kann auch separat von beiden ausgebildet sein.

An ihrem unteren Ende sind die Parallelogrammarme 24, 26 jeweils an einer Sitzschiene des zugehörigen Schienenpaars 28, 30 angelenkt. Dieser Gelenkbereich wird als unteres Schwenkgelenk 38 bezeichnet.

Im hinteren Bereich ist jedes Seitenteil 20, 22 über eine Schwenkstütze abgestützt, es sind eine linke Schwenkstütze 40 und eine rechte Schwenkstütze 42 vorgesehen. Diese Schwenkstützen werden auch als hintere Schwenkstützen bezeichnet. Sie sind über eine Querwelle 44 drehfest miteinander verbunden. An einer Sitzseite, hier der linken Sitzseite, ist eine Verstelleinrichtung 46 ausgebildet. Im konkreten Fall hat sie einen Zahnbogen, der mit der zugehörigen, linken Schwenkstütze 40 verbunden ist und der zentrisch zum oberen Schwenkgelenk, also zu Achse der Querwelle 44 verläuft. Ihm ist ein Sperrschnabel 48 zugeordnet, der um eine Achse schwenkbar am linken Seitenteil 20 angelenkt ist. Auf diese Weise wird das obere Gelenk gesperrt. Zum Antrieb kann eine hier nicht dargestellte, ansich bekannte mechanische oder motorische Verstellantriebseinheit vorgesehen sein.

Die beiden Schwenkstützen 40, 42 sind jeweils an ihrem unteren Ende in einem unteren Gelenk mit der Sitzschiene des zugehörigen Schienenpaars 28, bzw. 30 schwenkverbunden. Insgesamt wird ein Gelenkviereck gebildet, das sich beispielsweise für die linke Sitzseite aus folgenden vier Gelenkteilen zusammensetzt:
Linkes Seitenteil 20, linker vorderer Parallelogrammarm 24, Sitzschiene des linken Schienenpaares 28 und linke Schwenkstütze 40.

Im oberen hinteren Bereich der beiden Seitenteile 20, 22 ist noch eine Rükkenlehne angeordnet, gezeigt sind Träger 50 einer Rückenlehne, die um eine Achse schwenkbar miteinander verbunden sind.

Jedes Seitenteil 20, 22 hat weiterhin eine zweite Bohrung 52, die sich weiter zu einer Vorderkante 54 hin versetzt befindet als die erste Bohrung 32. Die Mittelpunkte der zweiten Bohrung 52, der ersten Bohrung 32 und des oberen Schwenkpunktes der Schwenkstütze 40, bzw. 42 liegen im wesentlichen auf einer Geraden. Schließlich ist noch ein Schwenklagermittel 56 vorgesehen, das sich schräg oberhalb der zweiten Bohrung 52 befindet und in der gezeigten Ausführung als Loch bzw. Bohrung ausgeführt ist. Es kann in kinematischer Umkehrung auch als Lagerstift ausgebildet sein. Auf die erwähnte zweite Bohrung 52 und dieses Schwenklagermittel 56 wird im folgenden eingegangen:

Alternativ zu der Ausbildung mit Höhenverstellung des Sitzträgers, wie in Fig. 1 gezeigt, kann das Sitzgestell auch zusätzlich mit einer Neigungsverstellung ausgerüstet werden. Während Fig. 1 die sogenannte erste Alternative zeigt, zeigt Fig. 2 die zweite Alternative für das Sitzgestell, die nun die zusätzliche Neigungsverstelleinrichtung aufweist. Die Unterschiede zwischen den beiden Figuren betreffen lediglich den vorderen Bereich der Seitenteile 20, 22, im hinteren Bereich, also im Bereich der Schwenkstützen 40, 42 usw., finden sich keine Änderungen.

Um von der ersten Alternative zur zweiten Alternative zu gelangen, also das Sitzgestell zusätzlich mit einer Neigungsverstellung auszurüsten, werden anstelle der beiden vorderen Parallelogrammarme 24, 26 zwei Armpaare 58 eingesetzt und wird zusätzlich eine Einstellvorrichtung 60 angebracht.

Jedes Armpaar 58 besteht aus einem oberen Arm 62 und einem unteren Arm 64. Beide sind in einem gemeinsamen Gelenk miteinander gelenkverbunden. Sie stehen im wesentlichen V-förmig zu einander. Der obere Arm 62 hat im Abstand zum gemeinsamen Gelenk 66 ein Lagerungsteil 68, das hier als Bolzen ausgeführt ist und der zweiten Bohrung 52 so angepasst ist, dass es in dieser schwenkgelagert werden kann. Die konkrete Ausführung des Schwenkgelenks zwischen dem oberen Arm 62 und dem jeweiligen Seitenteil 20, 22 ist beliebig. Das Lagerungsteil bzw. zweites Lagermittel 68 kann auch anders als beschrieben ausgeführt sein, beispielsweise als Lagerbohrung. Diese Lagerbohrung und die zweite Bohrung 52 werden von einem Lagerbolzen durchgriffen oder es ist anstelle der zweiten Bohrung 52 ein Lagerstift vorgesehen. Diese Hinweise sollen belegen, dass die konkrete Ausbildung des Schwenkgelenks zwischen den oberen Arm 62 und dem Seitenteil 20 bzw. 22 beliebig ist, ebenso wie dies bereits für die Schwenkverbindung zwischen dem Parallelogrammarm 24 bzw. 26 und dem zugehörigen Seitenteil 20, 22 erläutert wurde.

Der obere Arm 62 hat in der hier gezeigten Ausführung ein Zahnsegment 70, das Teil der Einstellvorrichtung 60 ist. Es ist zentrisch zur Achse der zweiten Bohrung 52. Ihm ist ein Sperrteil 72 zugeordnet, das ähnlich wie der Sperrschnabel 48 ausgebildet ist und um das Schwenklagermittel 56 schwenkbar ist. Weiterhin ist noch eine hier nicht näher dargestellte Antriebsvorrichtung vorgesehen, die motorisch oder manuell ausgebildet sein kann. Derartige Antriebsvorrichtungen sind aus dem Stand der Technik bekannt. Durch Verändern des Eingriffs zwischen Zahnsegment 70 und Sperrteil 72 kann in bekannter Weise die Winkellage des oberen Arms 62 verändert werden. Damit verändert sich die Position des gemeinsamen Gelenks 66 relativ zum zugehörigen Seitenteil 20 bzw. 22.

An seinem unteren Ende ist der untere Arm 64 an der Sitzschiene des zugehörigen Schienenpaars angelenkt. Dies geschieht an derselben Stelle, an der sonst der vordere Parallelogrammarm angelenkt ist und vorzugsweise auch in gleicher Weise.

Der untere Arm 64 kann mit einem vorderen Parallelogrammarm 24 bzw. 26 baugleich sein. Er hat vorzugsweise die gleiche Länge wie dieser. Er kann aber auch etwas kürzer oder länger ausgeführt sein. Der obere Arm 62 hat eine Länge zwischen dem gemeinsamen Gelenk 66 und der zweiten Bohrung 52, die etwa gleich ist, vorzugsweise identisch ist mit dem Abstand der ersten Bohrung 32 zu der zweiten Bohrung 52.

In Fig. 2 ist die Einstellvorrichtung 60 in einer Position gezeigt, bei der das gemeinsame Gelenk 66 mit der ersten Bohrung 32 fluchtet und diese überdeckt. Bei dieser Position der Neigungsverstellung ist die Kinematik der Höhenverstellung dieselbe wie in Fig. 1.

Die beiden Armpaare 58 des Sitzgestells sind durch eine Traverse 36 oder ein ähnliches Mittel miteinander verbunden. Diese Traverse 36 ist in der gezeigten Ausführung des Fig. 2 drehbar in den zweiten Bohrungen 52 jedes Seitenteils 20, 22 gelagert. Es können aber auch die unteren Arme 64 durch eine Traverse 36 verbunden sein, ebenso kann eine Welle die beiden gemeinsamen Gelenke 66 drehstarr miteinander verbinden.

Die Seitenteile 20, 22 sind in beiden Figuren jeweils baugleich. Irgendwelche geometrischen Unterschiede in den beiden Figuren, sofern sie vorliegen, sind ungewollt.

## Patentansprüche

1. Sitzgestell eines Kraftfahrzeugsitzes mit einer Längsverstelleinrichtung und mit einem Sitzträger, der mindestens ein Seitenteil (20) hat, welches Seitenteil (20) eine erste Bohrung (32) und eine zweite Bohrung (52) aufweist,
a) wobei in einer ersten Ausbildung des Sitzgestells, die keine Möglichkeit der Höheneinstellung einer Sitzvorderkante aufweist, ein vorderer Parallelogrammarm (24) vorgesehen ist, der in einem unterem Schwenkgelenk (38) mit der Längsverstelleinrichtung verbunden ist, und der ein erstes Lagermittel aufweist, das mit der ersten Bohrung (32) zusammenwirkt, sodass ein oberes Schwenkgelenk zwischen Seitenteil (20) und Parallelogrammarm (24) ausgebildet wird
b) und in einer zweiten Ausbildung des Sitzgestells, die eine Höheneinstellung der Sitzvorderkante aufweist, anstelle des Parallelogrammarms (24) ein Armpaar (58) vorgesehen ist, das aus einem oberen Arm (62) und einem unteren Arm (64) zusammen gesetzt ist, welche in einem gemeinsamen Gelenk (66) schwenkverbunden sind, wobei der obere Arm (62) im Abstand vom gemeinsamen Gelenk (66) ein zweites Lagermittel (68) aufweist, mit dem der obere Arm (62) in der zweiten Bohrung (52) gelagert ist, eine Einstellvorrichtung (60) für die Winkellage des oberen Arms (62) relativ zum Sitzträger vorgesehen ist, in einer bestimmten Verstellposition dieser Einstellvorrichtung (60) die Achse des gemeinsamen Gelenks (66) im wesentlichen mit der ersten Bohrung (32) fluchtet, im unteren Schwenkgelenk (38) der untere Arm (64) an der Längsverstellvorrichtung angelenkt ist und der untere Arm (64) zwischen seinen beiden Gelenkpunkten im wesentlichen die gleiche Länge aufweist wie der Parallelogrammarm (24) zwischen dem oberen Schwenkgelenk und dem unteren Schwenkgelenk (38).

2. Sitzgestell nach Anspruch 1, **dadurch gekennzeichnet, dass** der Sitzträger ein linkes und ein rechtes Seitenteil (20, 22) hat, dass ein linker und ein rechter vorderer Parallelogrammarm (24, 26) vorgesehen ist und dass eine linke und eine rechte Längsverstelleinrichtung vorgesehen ist, dass jedes Seitenteil (20, 22) eine erste Bohrung (32) und eine zweite Bohrung (52) aufweist und dass alternativ zu den beiden Parallelogrammarmen das Sitzgestell mit zwei Armpaaren (58) ausgerüstet werden kann, die jeweils aus einem unteren Arm (64) und einem oberen Arm (62) zusammengesetzt sind.

3. Sitzgestell nach Anspruch 1, **dadurch gekennzeichnet, dass** die beiden vorderen Parallelogrammarme (20, 22) und die beiden Armpaare (58) durch eine Traverse (36) miteinander verbunden sind.

4. Sitzgestell nach Anspruch 1, **dadurch gekennzeichnet, dass** die Einstellvorrichtung (60) ein Einstellmittel aufweist, das an einer Sitzseite vorgesehen ist, und dass sie weiterhin eine die beiden oberen Arme (62) verbindende Welle aufweist.

5. Sitzgestell nach Anspruch 1, **dadurch gekennzeichnet, dass** sich die zweite Bohrung (52) näher einer Sitzvorderkante befindet als die erste Bohrung (32).

6. Sitzgestell nach Anspruch 1, **dadurch gekennzeichnet, dass** die erste Bohrung (32) und die zweite Bohrung (52) jeweils etwa den gleichen Abstand von der Längsverstelleinrichtung haben.

7. Sitzgestell nach Anspruch 1, **dadurch gekennzeichnet, dass** der Abstand der ersten Bohrung (32) von der zweiten Bohrung (52) des Sitzträger dem Abstand der Schwenkachsen eines oberen Armes (62) entspricht.

8. Sitzgestell nach Anspruch 1. **dadurch gekennzeichnet, dass** es weiterhin eine linke und eine rechte hintere Schwenkstütze (40, 42) aufweist, über die der Sitzträger mit der Längsverstelleinrichtung schwenkbar verbunden ist.

9. Sitzgestell nach Anspruch 1, **dadurch gekennzeichnet, dass** die bestimmte Verstellposition der Einstellvorrichtung (60) in einem Bereich liegt, der ausgehend von der Mittelposition dieser Einstellvorrichtung (60) hin zu einer tieferen Einstellung der Sitzvorderkante liegt.

10. Sitzgestell nach Anspruch 1, **dadurch gekennzeichnet, dass** das Seitenteil ein Lagermittel (56) für ein schwenkbares Sperrteil (72) hat, dass in der Alternative ein schwenkbares Sperrteil (72) vorgesehen ist und zugleich der obere Arm (62) ein Zahnsegment (70) aufweist, das mit dem Sperrteil (72) zusammenwirkt.

## Claims

1. A seat frame of a vehicle seat with a longitudinal adjustment device and with a seat carrier having at least one side part (20) provided with a first bore (32) and a second bore (52),
a) wherein, in a first embodiment of the seat frame having no means for a height adjustment of a front portion of the seat, a front parallelogram arm (24) is provided, is connected with the longitudinal adjustment device in a lower pivot joint (38), and comprises a first bearing member cooperating with the first bore (32) so that an upper pivot joint is configured between the side part (20) and the parallelogram arm (24),
b) and in a second embodiment of the seat frame having means for a height adjustment of the front portion of the seat, instead of the parallelogram arm (24), a pair of arms (58) is provided which is composed of an upper arm (62) and of a lower arm (64), both being pivotally joined together in one common joint (66), whereby the upper arm (62) is provided with a second bearing member (68) which is spaced from the common joint (66) by means of which the upper arm (62) is lodged in the second bore (52), a device (60) for adjusting the angular position of the upper arm (62) relative to the seat carrier is provided, the axis of the common joint (66) is substantially aligned with the first bore(32) in a certain position of adjustment of said device (60), the lower arm (64) is hingeably attached to the longitudinal adjustment device and the lower arm (64) has, between the two hinge points thereof, substantially the same length the parallelogram arm (24) is provided with between the upper pivot joint, and the lower pivot joint (38).

2. The seat frame of claim 1, **characterized in that** the seat carrier has a left and a right side part (20, 22), that a left and a right front parallelogram arm (24, 26) is provided and that a left and a right longitudinal adjustment device is provided, that each side part (20, 22) is provided with a first bore (32) and with a second bore (52) and that, alternatively, instead of the two parallelogram arms, the seat frame may be fitted with two pairs of arms (58) that are each composed of a lower arm (64) and of an upper arm (62).

3. The seat frame of claim 1, **characterized in that** the two front parallelogram arms (24, 26) and the two pairs of arms (58) are joined together by a tie bar (36).

4. The seat frame of claim 1, **characterized in that** the adjustment device (60) is provided with an adjustment member provided on one side of the seat and that it is furthermore provided with a shaft that connects together the two upper arms (62).

5. The seat frame of claim 1, **characterized in that** the second bore (52) is located nearer a front edge of the seat than the first bore (32).

6. The seat frame of claim 1, **characterized in that** the first bore (32) and the second bore (52) are each located at approximately the same distance from the longitudinal adjustment device.

7. The seat frame of claim 1, **characterized in that** the distance from the first bore (32) to the second bore (52) of the seat carrier corresponds to the distance between the pivot axes of the one upper arm (62).

8. The seat frame of claim 1, **characterized in that** it is furthermore provided with a left and a right rear swivelling support (40, 42) by way of which the seat carrier is pivotally connected to the longitudinal adjustment device.

9. The seat frame of claim 1, **characterized in that** the certain position of adjustment of the adjustment device (60) is situated in a region that extends from the center position of said adjustment device (60) toward a lower setting of the front edge of the seat.

10. The seat frame of claim 1, **characterized in that** the side part has a bearing member (56) for a pivotal locking member (72), that, in the alternative embodiment, a pivotal locking member (72) is provided and the upper arm (62) is also provided with a toothed quadrant (70) that cooperates with the locking member (72).

## Revendications

1. Châssis de siège d'un siège de véhicule automobile comprenant un dispositif de réglage longitudinal et un support de siège qui présente au moins une partie latérale (20), ladite partie latérale (20) présentant un premier perçage (32) et un second perçage (52),
a) dans une première configuration du châssis de siège laquelle ne présente aucune possibilité de réglage en hauteur d'une arête avant du siège, étant prévu un bras avant de parallélogramme (24) qui est relié - dans une articulation inférieure de pivotement (38) - audit dispositif de réglage longitudinal et qui présente un premier moyen à loger qui agit de concert avec ledit premier perçage (32) de sorte qu'une articulation supérieure de pivotement est réalisée entre la partie latérale (20) et le bras de parallélogramme (24),
b) et, dans une deuxième configuration du châssis de siège laquelle présente un réglage en hauteur de l'arête avant du siège, étant prévue - au lieu dudit bras de parallélogramme (24) - une paire de bras (58) qui est composée d'un bras supérieur (62) et d'un bras inférieur (64) qui sont reliés entre eux à pivotement dans une articulation commune (66), ledit bras supérieur (62) présentant à distance de l'articulation commune (66) un second moyen à loger (68) par l'intermédiaire duquel le bras supérieur (62) est logé dans le second perçage (52), un dispositif de réglage (60) étant prévu pour la position angulaire du bras supérieur (62) par rapport au support de siège, l'axe de l'articulation commune (66) étant - dans une position déterminée de réglage de ce dispositif de réglage (60) - pour l'essentiel aligné avec le premier perçage (32), ledit bras inférieur (64) étant articulé dans l'articulation inférieure de pivotement (38) sur le dispositif de réglage longitudinal, et le bras inférieur (64) présentant, entre ses deux points d'articulation, pour l'essentiel la même longueur que le bras de parallélogramme (24) entre l'articulation supérieure de pivotement et l'articulation inférieure de pivotement (38).

2. Châssis de siège selon la revendication 1, **caractérisé par le fait que** le support de siège présente des parties latérales gauche et droite (20, 22), que l'on prévoit des bras avant gauche et droit de parallélogramme (24, 26) et que l'on prévoit des dispositifs gauche et droit de réglage longitudinal, que chacune des parties latérales (20, 22) présente un premier perçage (32) et un second perçage (52) et que, dans une alternative aux deux bras de parallélogramme, le châssis de siège peut être équipé de deux paires de bras (58) qui sont composées chacune d'un bras inférieur (64) et d'un bras supérieur (62).

3. Châssis de siège selon la revendication 1, **caractérisé par le fait que** les deux bras avant de parallélogramme (24, 26) et les deux paires de bras (58) sont reliés entre eux par une traverse (36).

4. Châssis de siège selon la revendication 1, **caractérisé par le fait que** ledit dispositif de réglage (60) présente un moyen de réglage qui est prévu sur un côté du siège et qu'il présente en outre un arbre reliant les deux bras supérieurs (62).

5. Châssis de siège selon la revendication 1, **caractérisé par le fait que** ledit second perçage (52) est situé plus près d'une arête avant du siège que le premier perçage (32).

6. Châssis de siège selon la revendication 1, **caractérisé par le fait que** ledit premier perçage (32) et ledit second perçage (52) présentent chacun à peu près la même distance par rapport au dispositif de réglage longitudinal.

7. Châssis de siège selon la revendication 1, **caractérisé par le fait que** la distance entre le premier perçage (32) et le second perçage (52) du support de siège correspond à la distance entre les axes de pivotement d'un bras supérieur (62).

8. Châssis de siège selon la revendication 1, **caractérisé par le fait qu'**il présente en sus des appuis pivotants arrière gauche et droit (40, 42) par l'intermédiaire desquels le support de siège est relié à pivotement au dispositif de réglage longitudinal.

9. Châssis de siège selon la revendication 1, **caractérisé par le fait que** ladite position déterminée de réglage du dispositif de réglage (60) est située dans une zone qui, à partir de la position médiane de ce dispositif de réglage (60), est située vers un réglage plus bas de l'arête avant du siège.

10. Châssis de siège selon la revendication 1, **caractérisé par le fait que** ladite partie latérale présente un moyen à loger ou de logement (56) pour une partie pivotante d'arrêt (72), que, en variante, on prévoit une partie pivotante d'arrêt (72) et, en même temps, le bras supérieur (62) présente un segment denté (70) qui agit de concert ave ladite partie d'arrêt (72).
